# EUROPÄISCHE PATENTANMELDUNG

(11) **EP 0 806 438 A2**
(43) Veröffentlichungstag der Anmeldung: **12.11.1997**
(21) Anmeldenummer: 97107047.9
(22) Anmeldetag: 29.04.1997
(51) Int. Cl.: C08F 210/02, C08F 2/14

(54) **Verfahren zur Herstellung von Copolymeren aus Ethylen mit polaren Monomeren**

(30) Priorität: 10.05.1996 DE 19618833
(71) Anmelder: BAYER AG, 51368 Leverkusen (DE)
(72) Erfinder: Leiberich, Ricarda, Dr., 63225 Langen (DE); Dohrn, Ralf, Dr., 51467 Bergisch Gladbach (DE); Waldmann, Helmut, Dr., 52385 Nideggen (DE); Gasche, Hans-Erich, Dr., 51519 Odenthal (DE); Hoch, Martin, Dr., 42657 Solingen (DE); Greve, Heinz-Hermann, Dr., 50825 Köln (DE)

(57) **Zusammenfassung**

Die Erfindung betrifft ein Verfahren zur Herstellung von Copolymeren von Ethylen mit polaren Monomeren in Gegenwart von überkritischem Kohlendioxid.

## Beschreibung

Die Erfindung betrifft ein Verfahren zur Herstellung von Copolymeren aus Ethylen und polaren Monomeren in Gegenwart von überkritischem Kohlendioxid.

Ethylen-Vinylacetat-Copolymere (Levapren) können allgemein durch kontinuierliche Lösungs-, Emulsions- oder auch Massepolymerisation hergestellt werden. Die Polymerisation wird radikalisch initiiert und ergibt Copolymerisate mit statistischer Verteilung der Monomerbausteine.

Die Copolymerisationsparameter für Ethylen und Vinylacetat liegen nahe bei 1. Ein "azeotropes" Verhalten ergibt sich z.B. für eine Mischung von je 50 Gew.-% Ethylen und Vinylacetat bei 90°C und einem Druck von 1000 bar (US-A 3 168 456, R.D. Burkhart, J. Poly. Sci. Part A 1 (1963) 1137). Bei einem derartigen Monomergemisch bleibt die Zusammensetzung des Polymers über einen weiten Umsatzbereich konstant. Die Copolymerisationsparameter sind abhängig von der Temperatur, dem Druck sowie von einem gegebenenfalls verwendeten Lösungsmittel.

Technisch werden EVM-Polymere entweder durch kontinuierliche Massepolymerisation bei Drücken von 1000 bis 3000 bar (G.W. Gilby, Dev. Rubber Technol. 3, (1981) 101) oder in Lösung (US-A 3 325 460, DE-A 14 95 767, DE-A 14 95 660, DE-A 11 26 613, DE-A 11 26 614) bei Drucken von 200 bis 1000 bar hergestellt. Die in Masseverfahren hergestellten Produkte weisen einen Vinylacetatgehalt von maximal 45 % auf da aufgrund der hohen Übertragungskonstante des Vinylacetats bei höheren Konzentrationen nur geringe mittlere Molmassen erreichbar sind (H. Bartl, Kautsch., Gummi, Kunstst. 25, (1972) 425).

Die Lösungspolymerisation gestattet es, einen weiten Bereich an Comonomerverhältnissen einzustellen. Die untere Grenze für den Gehalt an Vinylacetat wird bei diesem Verfahren durch den kritischen Entmischungsdruck bestimmt. Um die Bildung von teilvergeltem Material zu vermindern, muß bei Drücken oberhalb des kritischen Entmischungsdrucks polymerisiert werden. Die technisch realisierbaren Druckfestigkeiten der Reaktoren setzen hier Grenzen.

Bei der Lösungspolymerisation wird ein Gemisch von Ethylen/Vinylacetat (gegebenenfalls im "'azeotropen" Verhältnis) unter Zusatz eines möglichst wenig übertragenden Lösungsmittels, z.B. tert.-Butanol, Benzol, Toluol, verwendet (EP-A 374 666, EP-A 374 664, EP-A 374 660). Für die Polymerisation von Ethylen und Vinylacetat in tert.-Butanol werden in den genannten Schriften Maßnahmen angegeben, um möglichst gelfreie Produkte zu erhalten und eine Phasenentmischung während der Reaktion zu vermeiden. In einer Hochdruckpolymerisationsanlage können je nach Druckbegrenzung Copolymere mit einem bestimmten Mindestgehalt an Vinylacetat hergestellt werden. In einer Anlage für 380 bar sind dies Produkte mit ungefähr 40 Gew.-% Vinylacetat. Die Polymerisation erfolgt üblicherweise in einer mehrstufigen Rührkesselkaskade.

Ebenso sind Emulsionsverfahren bei Drücken von 1 bis 200 bar und im Temperaturbereich von 30 bis 70°C zur Herstellung von Ethylen-Vinylacetat-Copolymeren bekannt. Die Polymere zeigen einen hohen Gelanteil und lassen sich nicht vulkanisieren (B.V. Mitra und M.R. Katti, Pop. Plast. 18, (1973) 15). Der Vinylacetatanteil liegt bei 60 bis 100 %.

Die Mitverwendung eines Lösungsmittels und die Polymerisation in Emulsion führen im Vergleich zur reinen Massepolymerisation zu deutlich geringeren Viskositäten des Reaktionsgemisches und deutlich verbesserter Wärmeabfuhr im Reaktor.

Ein wesentlicher Nachteil der Lösungspolymerisation ist die technisch aufwendige Entfernung und Rückgewinnung der Lösungsmittel. Bei der Emulsionspolymerisation muß das anfallende Abwasser aufbereitet werden.

Die Massepolymerisation führt bei hohen Umsätzen zu hochviskosen Reaktionsschmelzen, so daß der Wärme- und Stofftransport im System behindert wird und technische Probleme bei der Reaktionsführung auftreten. Bei den derzeit üblichen Verfahren zur Massepolymerisation liegen die möglichen Umsätze daher bei weniger als 20 %, während bei Lösungsverfahren Umsätze bis zu 70 % erreicht werden können. Die Entfernung der Restmonomeren erfolgt destillativ, z.B. in technisch aufwendigen Schnecken-, Dünnschicht- oder Strangverdampfern (DE-A 21 38 176).

Eine Alternative hierzu stellt die Extraktion der Restmonomeren aus dem Polymer dar. Die Extraktion kann z.B. mit überkritischem CO₂ erfolgen (DE-A 33 23 940, US-A 4 695 621 A, US-A 4 703 105, DE-A 39 38 877). Hierbei werden je nach Bedingungen Restmonomergehalte von 50 bis 15 ppm erzielt.

Der vorliegenden Erfindung lag daher die Aufgabe zugrunde, ein Verfahren zur Verfügung zu stellen, mit dem Copolymere von Ethylen mit polaren Monomeren in einem Verdünnungsmittel erhalten werden, das eine gute Wärmeabfuhr ermöglicht, die Viskosität der Reaktionsmischung gering hält, gute Stofftransporteigenschaften besitzt, kleine Übertragungskonstanten aufweist, physiologisch unbedenklich ist, sich aus den Polymerisaten leicht entfernen läßt und die Entfernung von Restmonomeren erleichtert.

Die Aufgabe wird erfindungsgemäß gelöst durch ein Verfahren zur Herstellung von Copolymerisaten von Ethylen mit polaren Monomeren in Gegenwart von überkritischem Kohlendioxid als einem inerten Verdünnungsmittel.

Mit diesem Verfahren können radikalische Lösungspolymerisationen durchgeführt werden, in denen als Monomere neben Ethylen, Vinylacetat, Acrylate, Methacrylate, Alkenylacetate und CO (Kohlenmonoxid) einsetzbar sind. Bevorzugte Monomere sind Vinylacetat und Methylacrylat.

Die Eigenschaften von Kohlendioxid im überkritischen Zustand wurden von J.A. Hatt, J. Org. Chem. 4 (1984) 5097 beschrieben. Danach liegt der kritische Punkt von Kohlendioxid bei etwa 31°C und 73 bar.

Die Polymerisation kann in einem Druckbereich von 73 bis 3000 bar und bei Temperaturen oberhalb von 31°C durchgeführt werden. Bevorzugt sind Drucke von 100 bis 500 bar. Die bevorzugte Polymerisationstemperatur beträgt 60 bis 150°C.

Ethylen und Vinylacetat bzw. Ethylen und Methylacrylat liegen in der Monomermischung in einem Gewichtsverhältnis von 20/80 bis 80/20 vor.

Die Polymerisationsreaktion wird mit Hilfe von in Radikale zerfallende Initiatoren gestartet. Es können sämtliche Initiatoren eingesetzt werden, die für die Polymerisation der Monomeren bekannt sind. Geeignet sind beispielsweise im Temperaturbereich von 80 bis 130°C Dibenzoylperoxid, 2,2-Azobis-(isobutyronitril), tert.-Butylperpivalat, Azobis-isovaleronitril. Für Temperaturen oberhalb 120°C kann tert.-Butylperbenzoat (tBPB) eingesetzt werden; oberhalb 145°C lassen sich Peroxide wie Di-tert.-butylperoxid (DTBP) verwenden. Die Auswahl eines geeigneten Radikalbildners richtet sich wie üblich nach der angestrebten Polymerisationstemperatur bzw. der Polymerisationskinetik.

Die Initiatoren werden in den bei der Polymerisation üblichen Mengen eingesetzt; pro 100 Gew.-Teile der Monomere 0,005 bis 10, vorzugsweise 0,01 bis 5 Gew.-Teile des Initiators. Bezogen auf 100 Gew.-Teile Monomermischung verwendet man im allgemeinen 5 bis 1500, vorzugsweise 50 bis 900 Gew.-Teile CO₂. In einigen Fällen kann es vorteilhaft sein nur 5 bis 200 Gew.-Teile, oder sogar nur 20 bis 70 Gew.-Teile CO₂ auf 100 Gew.-Teile Monomermischung einzusetzen.

Die Polymerisationsreaktion kann diskontinuierlich oder kontinuierlich in entsprechend ausgelegten Druckapparaturen durchgeführt werden.

Um die bei der Polymerisation entstehende Wärme abzuführen, ist es wünschenswert, daß die Druckapparaturen über ein Kühlsystem verfügen. Weiterhin sollte die Apparatur beheizbar sein und über Mischeinrichtungen verfügen, z.B. Rührer (Blatt-, Anker-, Begasungs-Rührer).

Die Polymerisationen können beispielsweise so ausgeführt werden, daß man in einer Druckapparatur zunächst Vinylacetat und hierin gelösten Initator vorlegt, den Autoklaven verschließt und danach Ethylen gasförmig und Kohlendioxid in flüssiger Form einbringt. Hiernach wird das Reaktionsgemisch auf die gewünschte Polymerisationstemperatur erhitzt. Nach Abschluß der Polymerisation wird das Reaktionsgemisch abgekühlt und das Kohlendioxid durch Entspannen abgetrennt. Dabei fallen die Polymere als fester Rückstand an.

Eine besonders vorteilhafte Durchführung des erfindungsgemäßen Verfahrens besteht darin, daß man die Reaktion in einem kontinuierlich durchströmten Rohrreaktor durchführt. Als Rohrreaktor kommen grundsätzlich alle druckfesten Apparate in Frage, bei denen das Verhältnis von Länge zu Durchmesser größer als 10 ist. Die Länge des Reaktionsrohres richtet sich nach der Reaktionszeit, die je nach Temperatur, Druck, CO₂-Gehalt und Initiatorkonzentration in weiten Grenzen variieren kann. Ebenfalls vorteilhaft ist eine kontinuierliche Reaktionsführung in einer mehrstufigen Rührkesselkaskade.

Die Reaktionszeit beträgt im erfindungsgemäßen Verfahren 1 bis 10 Stunden.

Die kontinuierliche oder diskontinuierliche Entspannung des Reaktionsgemisches kann mit grundsätzlich allen üblichen technischen Vorrichtungen erfolgen, z.B. Ventilen, Düsen oder Entspannungsrohren. Vorzugsweise werden die dabei erhaltenen Gase nach Kompression ganz oder teilweise in den Prozeß zurückgeführt.

Um den Gehalt an Restmonomeren im Polymer zu verringern, ist es vorteilhaft, die Entspannung so zu führen, daß das Polymer am Ende der Reaktionsstrecke als Schmelze vorliegt. Dadurch wird bei einem gesteuerten Entspannungsschritt Restmonomer aus der Polymerphase in die CO₂-reiche Phase extrahiert. Um die üblichen Anforderungen entsprechenden Restmonomergehalte zu erreichen, kann es vorteilhaft sein, vor der Entspannung zusätzlich überkritisches CO₂ in den Reaktor einzudosieren. Das Polymer wird nach der vollständigen Entspannung als granulierbare, temperierte Schmelze erhalten.

Bei der radikalischen Lösungspolymerisation erweist sich der Einsatz von überkritischem CO₂ als besonders vorteilhaft, weil im Gegensatz zu den meisten anderen Lösungsmitteln praktisch keine Übertragungsreaktionen zu beobachten sind und dadurch höhere Molmassen zu erreichen sind. Weiterhin führt die Polymerisation in überkritischem CO₂ im Vergleich zu Polymerisationen in den üblichen Lösungsmittel zu geringeren Viskositäten.

Die beiden genannten Vorteile können besonders vorteilhaft zur Herstellung von Polymeren mit hohen Molekulargewichten, insbesondere Elastomeren, genutzt werden. Es entstehen Produkte geringerer Klebrigkeit und mit besseren Vulkanisateigenschaften, die gegenüber dem bisherigen Stand der Technik bei EVM- und AEM-Kautschuken deutlich verbesserte Eigenschaften aufweisen.

Die geringeren Viskositäten von Polymerisationen mit überkritischem CO₂ erlauben es, zu höheren Umsätzen zu polymerisieren, weil die Wärmeabfuhr deutlich verbessert ist und die Mischungen leichter zu rühren sind. Diese Verfahrensvorteile verbessern die Wirtschaftlichkeit bisheriger Verfahren.

Durch den Wegfall bisher üblicher Lösungsmittel entfallen auch Rückgewinnungs- und Reinigungsschritte. Die Aufarbeitung der Polymerisationsmischungen erfolgt vorzugsweise so, daß mit der Abtrennung des CO₂ auch verbliebene Monomere weitgehend entfernt werden. Die weitere Reinigung des Polymers kann dann in üblicher Weise erfolgen.

### Beispiele

Die Bestimmung der mittleren Molmassen und Molmassenverteilungen erfolgte mittels GPC-Analytik, die chemische Charakterisierung der Produkte über FT-IR.

### Beispiel 1

In einem 400 ml Autoklaven wurden 22,5 g Vinylacetat, 42,5 bar Ethylen und 0,502 g Azobisisobuttersäuredinitril vorgelegt. Dazu wurden 87 g Kohlendioxid in den Autoklaven dosiert, der mit einem Rührer und einer Heizvorrichtung ausgestattet war. Das Reaktionsgemisch wurde gerührt (800 U/min) und auf 70°C erwärmt. Dabei stellte sich ein Druck von 100 bar ein. Nach einer Verweilzeit des Reaktionsgemisches von 6 Stunden bei 70°C und 100 bar wurde der Autoklaveninhalt gekühlt und entspannt. Man erhielt ein farbloses Produkt mit einer Ausbeute von 24 %. Die mittlere Molmasse des Produktes betrug 15,3 * 10³ g/mol. Das Produkt zeigte einen Vinylacetatanteil von 72 %.

### Beispiel 2

In einem 400 ml Autoklaven wurden 43 g Vinylacetat, 58 bar Ethylen und 0,5024 g Azobisisobuttersäuredinitril vorgelegt. Dazu wurden 80 g Kohlendioxid in den Autoklaven dosiert, der mit einem Rührer und einer Beheizung ausgestattet war. Das Reaktionsgemisch wurde gerührt (800 U/min) und auf 80°C erwärmt. Dabei stellte sich ein Druck von 118 bar ein. Nach einer Verweilzeit des Reaktionsgemisches von 6 Stunden bei 80°C und 118 bar wurde der Autoklaveninhalt gekühlt und entspannt. Man erhielt ein farbloses Produkt mit einer Ausbeute von 40 %. Die mittlere Molmasse des Produktes betrug 148 * 10³ g/mol (bei einer Uneinheitlichkeit von 6). Das Produkt zeigte einen Vinylacetatanteil von 56 %.

### Beispiel 3

In einem 400 ml Autoklaven wurden 22,5 g Vinylacetat, 42,5 bar Ethylen und 0,5024 g Azobisisobuttersäuredinitril vorgelegt. Dazu wurden 180 g Kohlendioxid in den Autoklaven dosiert, der mit einem Rührer und einer Beheizung ausgestattet war. Das Reaktionsgemisch wurde gerührt (800 U/min) und auf 80°C erwärmt. Dabei stellte sich ein Druck von 170 bar ein. Nach einer Verweilzeit des Reaktionsgemisches von 6 Stunden bei 80°C und 170 bar wurde der Autoklaveninhalt gekühlt und entspannt. Man erhielt ein farbloses Produkt mit einer Ausbeute von 12 %. Die mittlere Molmasse des Produktes betrug 5 * 10³ g/mol (bei einer Uneinheitlichkeit von 0,92). Das Produkt zeigte einen Vinylacetatanteil von 54 %.

## Patentansprüche

1. Verfahren zur Herstellung von Copolymeren von Ethylen mit polaren Monomeren, dadurch gekennzeichnet, daß man Ethylen und die polaren Monomeren in Gegenwart von überkritischen Kohlendioxid als inertem Verdünnungsmittel unter Druck zur Umsetzung bringt.

2. Verfahren nach Anspruch 1, bei dem Ethylen und Vinylacetat oder Ethylen und Methylacrylat in Gegenwart von überkritischen Kohlendioxid bei Temperaturen von 31°C bis 200°C und Drücken von 73 bis 3000 bar polymerisiert werden.

3. Verfahren nach Anspruch 1, bei dem 5 bis 1500 Gew.-% Kohlendioxid, bezogen auf die Monomermischung, verwendet werden.

4. Verfahren nach Anspruch 1, bei dem Ethylen und Vinylacetat oder Ethylen und Methylacrylat im molaren Verhältnis 20/80 bis 80/20 eingesetzt werden.

5. Verfahren nach Anspruch 1, bei dem die Reaktionszeit 1 bis 10 Stunden beträgt.

6. Verfahren nach Anspruch 1, dadurch gekennzeichnet, daß man die Reaktion in einem Strömungsrohr durchführt.

7. Verfahren nach Anspruch 1, dadurch gekennzeichnet, daß man die Reaktion in einer mehrstufigen Rührkesselkaskade durchführt.

8. Verfahren nach Anspruch 1, bei dem die Reaktionsmischung nach Verlassen des Reaktors entspannt und die erhaltenen Gase nach Kompression ganz oder teilweise in den Prozeß zurückgeführt werden.
